Europäisches Patentamt

European Patent Office

Office européen des brevets

(19)

(11) Numéro de publication : **0 518 713 A1**

## (12) DEMANDE DE BREVET EUROPEEN

(21) Numéro de dépôt : **92401355.0**

(22) Date de dépôt : **19.05.92**

(51) Int. Cl.$^5$ : **C09K 11/59**

(30) Priorité : **11.06.91 FR 9107075**

(43) Date de publication de la demande :
**16.12.92 Bulletin 92/51**

(84) Etats contractants désignés :
**FR GB IT**

(71) Demandeur : **THOMSON-CSF**
**51, Esplanade du Général de Gaulle**
**F-92800 Puteaux (FR)**

(72) Inventeur : **Morell, Antoinette**
**THOMSON-CSF, SCPI, Cédex 67**
**F-92045 Paris la Défense (FR)**
Inventeur : **Goumard, Nathalie**
**THOMSON-CSF, SCPI, Cédex 67**
**F-92045 Paris la Défense (FR)**

(74) Mandataire : **Guérin, Michel et al**
**THOMSON-CSF SCPI B.P. 329**
**F-92402 COURBEVOIE CEDEX (FR)**

(54) **Matériau luminophore à base de silicate de zinc dopé manganèse et procédé d'obtention.**

(57)    Matériau luminophore à base de silicate de Zinc dopé manganèse dans lequel le dopage de manganèse est compris entre 3,5 et 25%.
    Ce matériau permet d'obtenir un temps de déclin très court après excitation.
    Application :
        Panneau de visualisation
        Tubes de télévision

EP 0 518 713 A1

L'invention concerne un matériau à base de silicate de zinc dopé manganèse et plus particulièrement un matériau luminophore à temps de déclin court applicable notamment en visualisation. L'invention concerne également un procédé d'obtention de ce matériau.

Parmi les luminophores connus, le silicate de zinc dopé au manganèse $Zn_2SiO_4$ : Mn est un luminophore connu depuis de nombreuses années sous le nom commercial P1. Sous excitation photonique ou électronique il émet une lumière verte très saturée. En outre, son rendement lumineux élevé associé à sa résistance au marquage sous l'impact du faisceau excitateur en font un luminophore de choix pour la visualisation. Le luminophore P1 est très utilisé en avionique pour les viseurs (HUD ou HDD : head-up ou head-down display) et dans les écrans à plasma.

Les luminophores P1 connus à ce jour présentent un taux de dopage en manganèse inférieur ou égal à 3,5 %. Ce taux de dopage est représenté par x dans la formule chimique générale :

$$Zn_{2-x}Mn_xSiO_4$$

De tels luminophores ont été décrits dans le document EP 123 947 ainsi que dans l'article "Fine Structure in the low temperature luminescence of $Zn_2Si O_4$ : Mn and $Mg_4Ta_2O_9$ : Mn" de A.L.N. STEVELS et al publié dans Journal of Luminescence 8 (1974) - 443-451. Cependant les matériaux décrits ne comporte qu'un faible dopage de manganèse. Ces matériaux présentent l'avantage d'émettre, sous excitation, un rayonnement de couleur verte très saturée et présentant donc une très grande luminosité.

On a constaté que ces matériaux possèdent un temps de déclin (temps d'extinction) important pouvant atteindre 25 ms ce qui est un inconvénient dans certaines applications de visualisation. Cependant, on a préféré conserver un faible dopage en manganèse pour être certain d'obtenir un bon rendement lumineux.

L'invention concerne donc un matériau luminophore à base de silicate de zinc dopé manganèse ($Zn_2SiO_4$ : Mn) caractérisé en ce que le dopage de manganèse est compris entre 3,5 et 25%.

L'invention concerne également un procédé de réalisation d'un matériau luminophore caractérisé en ce qu'il comporte les étapes suivantes :
- mélange en milieux aqueux d'oxyde de zinc ZnO, de gel de silice $SiO_2$ et de carbonate de manganèse $MnCO_3$ dans des proportions déterminées ;
- séchage de la suspension aqueuse obtenue ;
- cuisson de la matière séchée obtenue à une température qui est fonction du taux en manganèse contenu dans le mélange, cette température étant relativement basse pour un taux en manganèse élevé.

Les différents objets et caractéristiques de l'invention apparaîtront plus clairement dans la description qui va suivre faite à titre d'exemple en se reportant aux figures annexées qui représentent :
- la figure 1, une courbe représentant des temps des déclins obtenus en fonction du dopage du matériau ;
- la figure 2, une courbe représentant la luminance obtenue en fonction du dopage du matériau ;
- les figures 3 et 4, les coordonnées trichromatiques en fonction du dopage ;
- la figure 5, des courbes permettant d'étudier l'évolution du spectre d'émission du $Zn_2 Si O_4$ dopé Mn pour différentes températures de cuisson ;
- la figure 6, des courbes de luminance en fonction de la température de cuisson ;
- la figure 7, une courbe de températures de cuisson optimales en fonction des taux de dopages.

L'invention concerne donc un matériau luminophore à base de silicate de zinc dopé manganèse présentant un temps de déclin court. Le silicate de zinc dopé manganèse a pour formule :

$$Zn_{2-x}Mn_x Si O_4$$

Selon l'invention, le dopage en manganèse est tel que le taux de dopage répond aux conditions suivantes :

$$3,5 \% < x < 25 \%$$

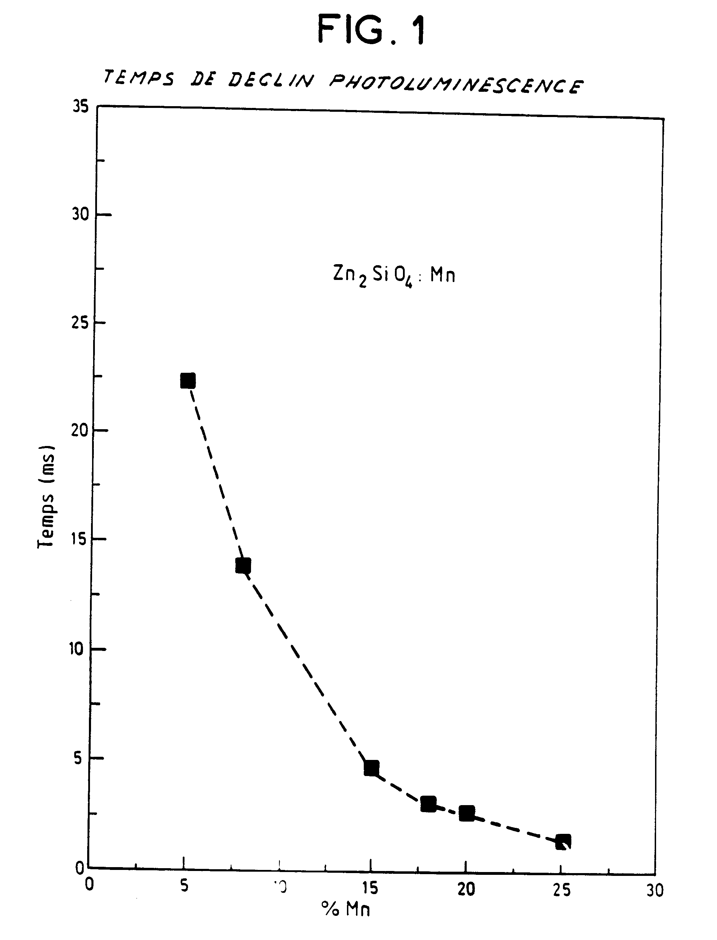

Une caractérisation en photoluminescence a permis de mettre en évidence qu'en choisissant un taux de dopage relativement élevé, c'est-à-dire compris entre 3,5 % et 25 %, on obtient un temps de déclin d'émission du matériau, après arrêt de l'excitation, relativement court. Plus particulièrement, un taux de dopage en manganèse compris entre 15 et 25 % fournit un avantage significatif. Dans le cadre des exemples qui vont être décrits ci-après on a considéré que le temps de déclin correspond au temps au terme duquel le rendement lumineux est égal au dixième de sa valeur initiale après cessation de l'excitation. La courbe de la figure 1 met en évidence que le temps de déclin diminue lorsque le dopage augmente. Sur la courbe de la figure 1, on voit notamment, qu'un taux de dopage de manganèse de 20 % permet d'obtenir un temps de déclin situé aux environs de 3 ms, ce qui présente un intérêt considérable dans des applications de visualisation. Des caractérisations en cathodoluminescence ont permis de mettre en évidence que les temps de déclin sont encore plus réduits qu'en fonctionnement en photoluminescence. C'est ainsi qu'avec un taux de dopage de 25 % on obtient un temps de déclin de 1,9 ms en photoluminescence et un temps de déclin de 0,7 ms en cathodoluminescence.

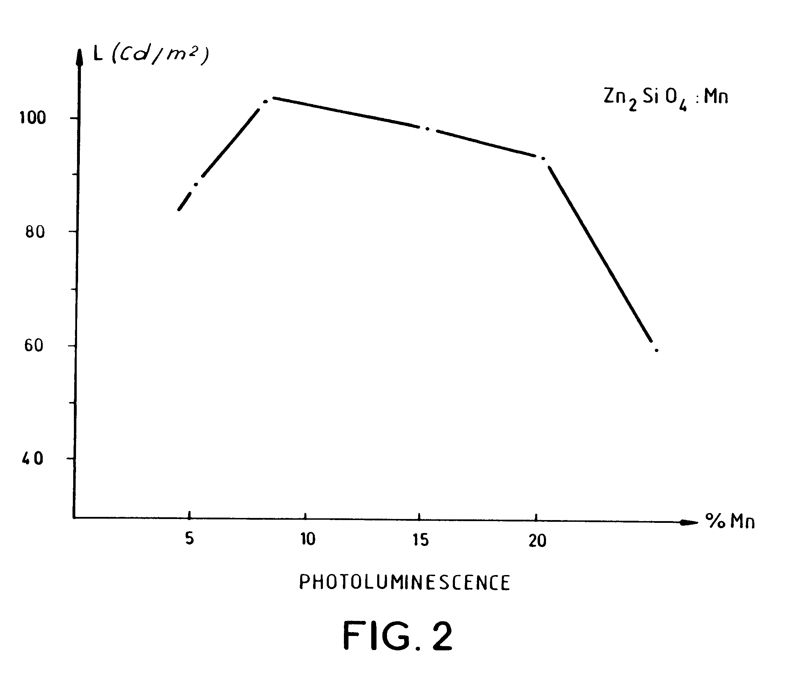

Des mesures de luminance sous excitation photonique ($\lambda = 265$ nm) en fonction du taux de dopage en manganèse sont représentées sur la figure 2. On observe que la luminance est maximum pour un taux de dopage de l'ordre de 8 %. Cependant à 25 % la luminance est encore très importante.

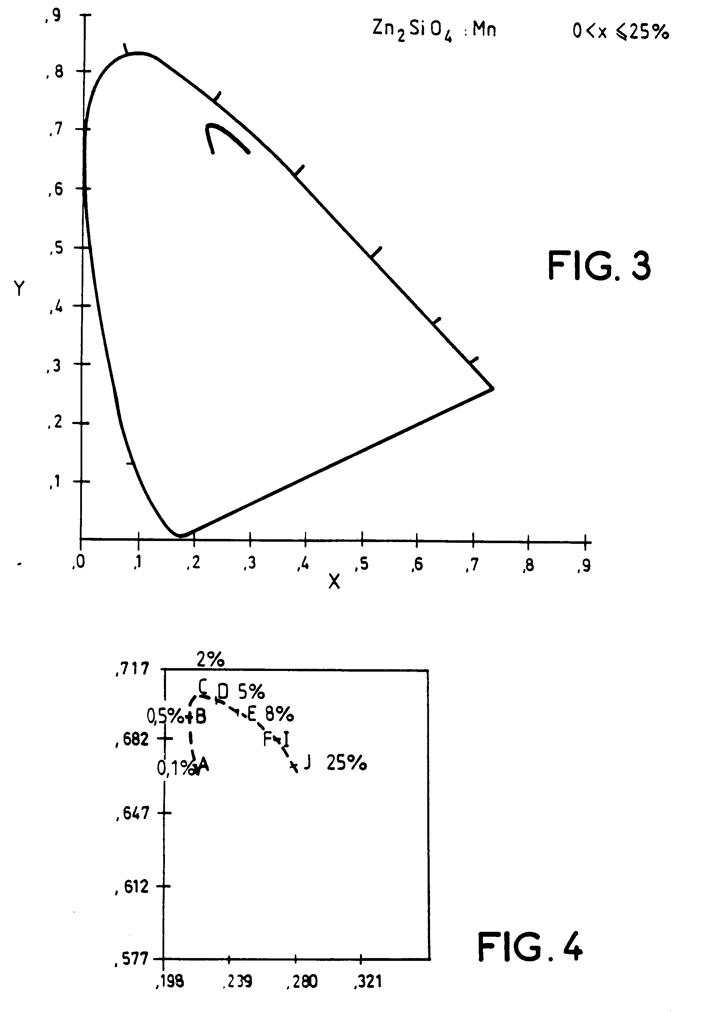

Les coordonnées trichromatiques X et Y permettent de définir la couleur de l'émission lumineuse dans le diagramme de chromaticité CIE. Elles sont rattachées à l'impression visuelle sur la rétine et sont donc des mesures réelles et directes de la couleur. L'évolution de X et Y pour les taux de dopages étudiés est donnée sur la figure 3.

La figure 4 donne une vue agrandie de cette évolution en X et Y.

Il est donc possible de modifier la couleur de l'émission dans une large gamme de valeurs en jouant sur le taux de dopage.

Les exemples donnés ci-après illustrent l'allure des courbes obtenues avec un matériau $Zn_{2-x} Mn_x SiO_4$

EXEMPLE 1

. Dopage à x = 5 %
. Température de cuisson : 1300°C-4h
. L : 88 Cd/m2
. Temps de déclin : 22 ms en photoluminescence

EXEMPLE 2

. Dopage à x = 8 %
. Température de cuisson : 1300°C - 4h
. L : 103 Cd/m2
. Temps de déclin 14 ms en photoluminescence

EXEMPLE 3

. Dopage à x = 15 %
. Température de cuisson : 1280°C - 4h
. L : 98 Cd/m2
. Temps de déclin : 5,00 ms en photoluminescence

EXEMPLE 4

. Dopage à x = 20 %
. Température de cuisson : 1200°C - 4h
. L : 94 Cd/m2
. Temps de déclin 3,5 ms en photoluminescence

EXEMPLE 5

. Dopage à x = 25 %
. Température de cuisson : 1150°C - 4 h
. L : 59 Cd/m2
. Temps de déclin 1,9 ms en photoluminescence

Comme cela a déjà été mentionné précédemment, les temps de déclin en cathodoluminescence sont encore plus court. C'est ainsi par exemple qu'on a mesuré les temps de déclin suivants en cathodoluminescence :

. 3,2 ms avec x = 15 %
. 1,8 ms avec x = 20 %
. 0,7 ms avec x = 25 %

On va maintenant décrire un procédé d'obtention des matériaux selon l'invention.

La synthèse de ces compositions consiste à mélanger en milieu aqueux l'oxyde de zinc ZnO, le gel de silice $SiO_2$ et le carbonate de manganèse $MnCO_3$ dans les proportions requises par la formule chimique pour les divers taux de manganèse.

A titre d'exemple, pour obtenir des pourcentages en manganèse de 5 %, 8 %, 15 %, 20 % et 25% on prévoit les compositions suivantes pour une mole de $Zn_2SiO_4$ : Mn :

| Mn | ZnO (g) | MnCO$_3$ (g) | SiO$_2$ (g) |
|---|---|---|---|
| 5 % | 158,7 | 5,7 | 60,1 |
| 8 % | 156,2 | 9,2 | 60,1 |
| 15 % | 150,5 | 17,2 | 60,1 |
| 20 % | 146,5 | 23,0 | 60,1 |
| 25 % | 142,4 | 28,7 | 60,1 |

Les mélanges sont agités pendant 4 heures environ. Après séchage des suspensions aqueuses des matières premières puis tamisage, les divers mélanges sont placés dans des creusets en alumine avec couvercle, eux-mêmes disposés dans un four. Le traitement thermique des mélanges permet d'assurer la formation d'une phase unique. Le profil de ce traitement est adapté pour chaque composition afin d'obtenir après cuisson, une poudre et non un bloc compact et dur. Afin de garder l'ion Mn à l'état divalent, les cuissons sont en atmosphère neutre sous flux d'azote.

Le critère pour déterminer la température optimale de cuisson est la mesure de la luminance L, exprimée en Candéla/m2 (Cd/m2), des poudres de luminophores. Le but est d'obtenir des valeurs de L les plus élevées possibles.

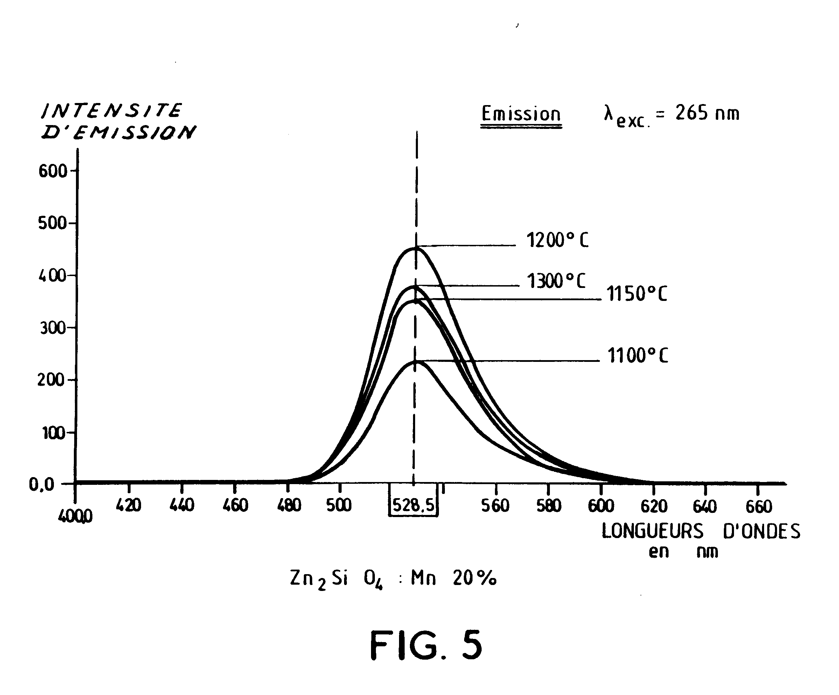

La figure 5 représente l'évolution du spectre d'émission de Zn$_2$ Si O$_4$ dopé avec 20 % de manganèse. Pour ce taux de dopage la luminance L maximum est obtenue sur la poudre de luminophore traitée thermiquement à 1200°C pendant 4 heures.

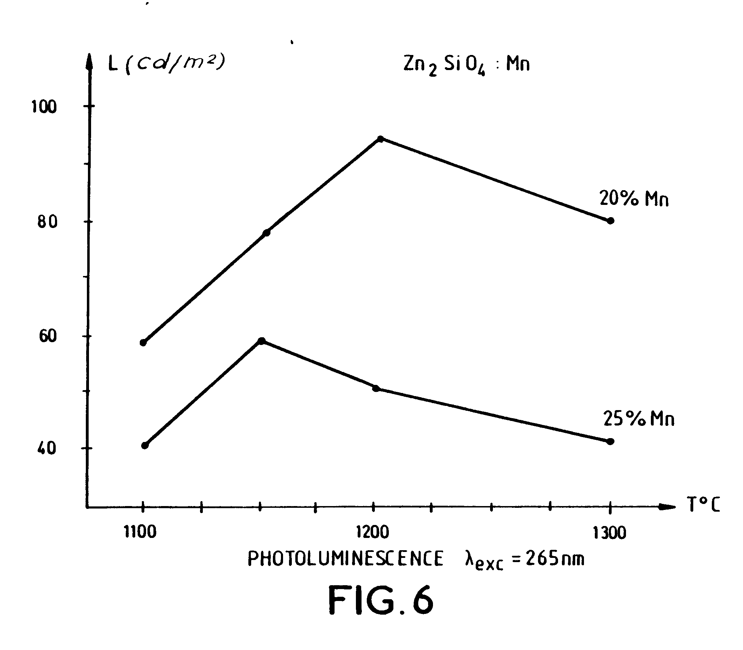

Une autre représentations de l'effet de la température de cuisson sur la luminance est donnée sur la figure 6 pour deux taux de dopages 20 et 25 %. Les valeurs optimales sont obtenues pour T°C = 1200°C et 1150°C respectivement.

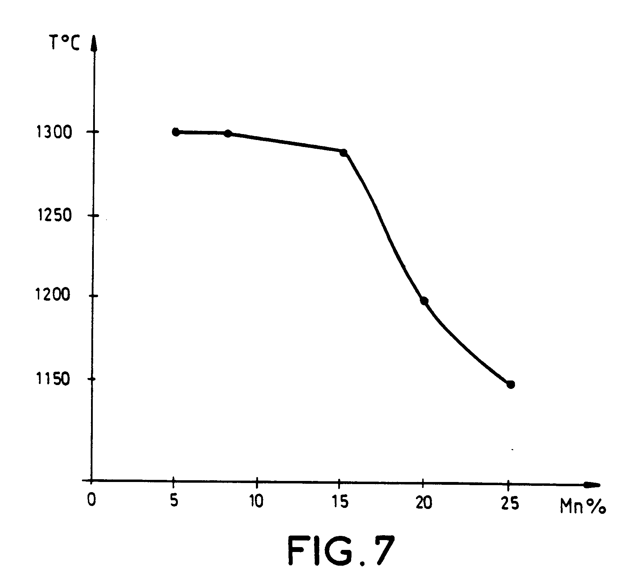

Enfin, la figure 7 donne la variation de la température optimale de cuisson pour divers taux de manganèse. Elle passe de 1300°C - 4 h pour x = 5 % à 1150°C - 4 h pour x = 25 %.

Il apparaît sur cette figure que la température de cuisson est située aux alentours de :

1300°C pour un taux de manganèse situé entre 0 et 15 %

1200°C pour un taux de manganèse situé entre 15 et 20 %. Plus précisément entre 1300°C et 1150°C, le choix de la température étant une fonction sensiblement linéaire du taux de manganèse

1150°C pour un taux de manganèse situé entre 20 et 25 %.

On voit donc que, selon l'invention, le temps de cuisson est fonction du taux de dopage et qu'il est d'autant plus faible que le taux de dopage est élevé.

Il est bien évident que la description qui précède n'a été faite qu'à titre d'exemple non limitatif et que d'autres variantes peuvent être envisagées sans sortir du cadre de l'invention.

## Revendications

1. Matériau luminophore à base de silicate de zinc dopé manganèse (Zn$_2$ Si O$_4$ : Mn) caractérisé en ce que le dopage de manganèse est compris entre 15 et 25%.

2. Procédé de réalisation d'un matériau luminophore caractérisé en ce qu'il comporte les étapes suivantes :
   - mélange en milieu aqueux d'oxyde de zinc ZnO, de gel de silice SiO$_2$ et de carbonate de manganèse MnCO$_3$ dans des proportions déterminées ;
   - séchage de la suspension aqueuse obtenue ;
   - cuisson de la matière séchée obtenue à une température fonction du taux en manganèse contenu dans le mélange, cette température étant relativement basse pour un taux en manganèse élevé.

3. Procédé selon la revendication 2, caractérisé en ce que le taux en manganèse est compris entre 5 et 25%.

4. Procédé selon la revendication 3, caractérisé en ce que la température de cuisson a une valeur :
   - de 1300°C environ pour un taux de manganèse compris environ entre 0 et 15 %
   - qui est sensiblement une fonction linéaire, entre 1150°C et 1300°C, du taux de manganèse lorsque celui est compris entre 15 et 20 %
   - de 1150°C environ pour un taux de manganèse compris entre environ 20 et 25%.

5. Procédé selon la revendication 4, caractérisé en ce que lorsque le taux de manganèse est compris entre 15 et 20 %, la température de cuisson est d'environ 1200°C.

6. Procédé selon la revendication 4, caractérisé en ce que le temps de cuisson est d'environ de 4 heures.

7. Procédé selon la revendication 2, caractérisé en ce que le mélange aqueux ne comporte que de l'oxyde de Zinc ZnO, du gel de silice $SiO_2$ et du carbonate de manganèse $MnCO_3$ à l'exclusion de tout autre produit.

# FIG. 1

TEMPS DE DECLIN PHOTOLUMINESCENCE

FIG. 2

FIG. 3

FIG. 4

FIG. 5

PHOTOLUMINESCENCE $\lambda_{exc} = 265\,nm$

FIG.6

FIG.7

**Office européen des brevets**

## RAPPORT DE RECHERCHE EUROPEENNE

Numero de la demande

EP    92 40 1355

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 377 123 (GTE) <br> * le document en entier * | 1-5 | C09K11/59 |
| X | EP-A-0 257 554 (GTE) <br> * le document en entier * | 1-6 | |

| DOMAINES TECHNIQUES RECHERCHES (Int. Cl.5) |
|---|
| C09K |

Le présent rapport a été établi pour toutes les revendications

| Lieu de la recherche | Date d'achèvement de la recherche | Examinateur |
|---|---|---|
| LA HAYE | 11 SEPTEMBRE 1992 | DROUOT M. C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\& : membre de la même famille, document correspondant

EPO FORM 1503 03.82 (P0402)